# NEUE EUROPÄISCHE PATENTSCHRIFT

(11) **EP 1 685 348 B2**
(45) Veröffentlichungstag und Bekanntmachung des Hinweises auf die Entscheidung über den Einspruch: **09.07.2014**
(45) Hinweis auf die Patenterteilung: 06.08.2008
(21) Anmeldenummer: 04797994.3
(22) Anmeldetag: 18.11.2004
(51) Int. Cl.: F21V 5/00, F21Y 103/00

(54) **LEUCHTE MIT TRANSPARENTEM LICHTAUSTRITTSELEMENT**
LAMP COMPRISING A TRANSPARENT LIGHT-EMERGING ELEMENT
LAMPE A ELEMENT DE SORTIE DE LUMIERE TRANSPARENT

(30) Priorität: 21.11.2003 DE 10354463
(43) Veröffentlichungstag der Anmeldung: 02.08.2006
(73) Patentinhaber: Zumtobel Lighting GmbH, 6850 Dornbirn (AT)
(72) Erfinder: BOHLE, Markus, A-6850 Dornbirn (AT); GADNER, Wolfgang, A-6912 Hörbranz (AT); SEJKORA, Günther, A-6867 Schwarzenberg (AT)
(74) Vertreter: Thun, Clemens
(86) Internationale Anmeldenummer: PCT/EP2004/013127
(87) Internationale Veröffentlichungsnummer: WO 2005/050087

(56) Entgegenhaltungen:
- EP-A- 0 221 416
- EP-A- 0 288 668
- EP-A- 1 279 889
- EP-A- 1 398 562
- WO-A1-92/18805
- DE-C- 945 835
- DE-C2- 3 904 947
- US-A- 4 991 073
- US-A1- 2002 114 169

## Beschreibung

Die vorliegende Erfindung betrifft eine Leuchte mit einem transparenten Lichtaustrittselement gemäß dem Oberbegriff des Anspruchs 1 sowie ein transparentes Lichtaustrittselement und ein Verfahren zum Herstellen desselben.

Leuchten enthalten oftmals transparente Lichtaustrittselemente oder Abdeckungen, über welche zumindest ein Teil des von den Lichtquellen erzeugten Lichts abgegeben wird. Der Grund für die Verwendung dieser transparenten Lichtaustrittselemente kann vielfältig sein. Oftmals haben transparente Abdeckungen beispielsweise die Aufgabe, die Lichtquellen sowie die weiteren elektrischen Komponenten der Leuchte vor Umgebungseinflüssen zu schützen. So werden in Räumen mit einer hohen Luftfeuchtigkeit beispielsweise sogenannte Feuchtraumleuchten und in Räumen mit hoher Staubbelastung sogenannte staubgeschützte Leuchten eingesetzt, bei denen die Lichtquellen von einem wannenförmigen transparenten Gehäuse abgedeckt und luftdicht umschlossen sind. Im Allgemeinen werden derartige Leuchten als sog. "Leuchten höherer Schutzart" bezeichnet. Ein weiterer Verwendungszweck für transparente Abdeckungen kann auch darin bestehen, die Abstrahlcharakteristik der Leuchte zu beeinflussen, was z.B. durch entsprechende Prismenstrukturen an der Außen- oder Innenseite der Abdeckung erzielt wird, welche die Lichtstrahlen in eine gewünschte Richtung bündeln bzw. ablenken. Ferner werden die transparenten Lichtaustrittselemente oder Abdeckungen in bestimmten Fällen auch eingefärbt, um dem abgestrahlten Licht eine gewünschte Farbe zu verleihen.

Bei einer aus der EP 1 279 889 A1 der Anmelderin bekannten Leuchte ist innerhalb der wannenförmigen transparenten Abdeckung ein Leuchtenraster vorgesehen, über welches das von den Lichtquellen abgegebene Licht auf einen vorgegebenen Winkelbereich eingeschränkt wird. Derartige Leuchtenraster werden üblicherweise dann verwendet, wenn Blendeffekte - beispielsweise in Räumen mit Bildschirmarbeitsplätzen - vermieden werden sollen. Die Lamellen des Rasters schränken dabei die Lichtstrahlen auf bestimmte Winkelbereiche ein, so dass eine seitlich unterhalb der Leuchte stehende Person bei einem Blick an die Decke nicht unmittelbar in die Lichtquellen blicken kann. Um diesen Effekt auch bei der Verwendung einer transparenten Abdeckung noch gewährleisten zu können, ist selbstverständlich erwünscht, dass die Abdeckung die durch das Raster vorgegebene Abstrahlcharakteristik der Leuchte nur unwesentlich beeinflusst, also die durch sie hintretenden Lichtstrahlen nicht oder nur geringfügig streut.

Transparente Abdeckkörper der eingangs beschriebenen Art werden in der Regel durch ein Spritzgieß- oder Blasverfahren hergestellt, bei dem der flüssige Kunststoff in eine Wannenform - das Werkzeug - eingebracht und abgekühlt wird. Die Wannenform ist glatt, was zur Folge hat, dass die fertige Abdeckung an ihrer Oberfläche ebenfalls glatt ist und damit für unter größeren Einfallswinkeln auftreffende Lichtstrahlen spiegelnd wirkt. Dies erweist sich im Gebrauch allerdings als nachteilig, da Fremd- bzw. Außenlicht an der Außenseite der Abdeckung reflektiert wird und damit einen unerwünschten Effekt hervorruft. Darüber hinaus hat sich in letzter Zeit herausgestellt, dass Abdeckungen bzw. Lichtaustrittselemente mit einer glatten Oberfläche als optisch weniger ansprechend angesehen werden, da aufgrund der Spiegelungen den Eindruck erweckt wird, als wären sie mit fettigen oder ölhaltigen Stoffen verschmiert.

Um diese unerwünschten Effekte zu vermeiden, ist bislang bekannt, die Außenseite der transparenten Abstrahlelemente aufzurauhen. Dies kann beispielsweise durch Erodieren, Sandstrahlen oder Ätzen bewirkt werden. Eine auf diese Weise bearbeitete transparente Abdeckung ist beispielsweise aus der EP 0 288 668 A2 bekannt. Diese Oberflächenbehandlung bringt allerdings den Nachteil mit sich, dass die Oberfläche nunmehr das austretende Licht in starkem Maße streut und damit die Wirkung eines zwischen der Lichtquelle und dem Lichtaustrittselement angeordneten Leuchtenrasters somit zumindest teilweise wieder aufgehoben werden würde. Ein weiterer Nachteil besteht darin, dass die in der oben beschriebenen Weise bearbeiteten Oberflächen nur noch schwer zu reinigen und Verschmutzungen wie Staub oder Fingerabdrücke deutlich erkennbar sind.

Dokument EP 0 221 416 beschreibt eine Linse und ein Verfahren zu ihrer Herstellung, wobei die Oberfläche der Linse Mikroelemente, insbesondere, Mikroerhebungen aufweist.

Die europaïsche Patentanmeldung, EP 1 398 562, veröffentlicht am 17.03.2004, offenbart alle technischen Merkmale des Oberbegriffs des Anspruchs 1.

Der vorliegenden Erfindung liegt daher die Aufgabe zugrunde, eine Abdeckung bzw. ein transparentes Lichtaustrittselement für eine Leuchte derart zu gestalten, dass die oben erwähnten Nachteile bezüglich unerwünschter Reflexionen an der Außenseite vermieden werden, andererseits die lichtlenkende Wirkung von in der Leuchte angeordneten Lichtbeeinflussungselementen wie beispielsweise Reflektoren oder Raster nicht maßgeblich gestört wird.

Die Aufgabe wird durch eine Leuchte mit den Merkmalen des Anspruchs 1 bzw. durch ein Lichtaustrittselement gemäß Anspruch 9 gelöst.

Die erfindungsgemäße Leuchte weist zunächst mindestens eine Lichtquelle sowie ein in Lichtabstrahlrichtung gesehen vor der Lichtquelle angeordnetes transparentes Lichtaustrittselement auf. Dabei ist das Lichtaustrittselement an seiner Außenseite, das heißt an seiner der Lichtquelle abgewandten Oberfläche mit linsenförmigen Vorsprüngen oder kalottenförmigen Rücksprüngen, die keine regelmäßige Anordnung aufweisen, versehen. Erfindungsgemäß werden die linsenförmigen Vorsprünge beziehungsweise kalottenförmigen Rücksprünge hinsichtlich ihrer Abmessungen dabei derart gewählt, dass bei einer Transmission von Licht eine Ablenkung eines Lichtstrahls von maximal 5 Grad auftritt. Dies wird dadurch erreicht, dass das Verhältnis der Tiefe eines Vorsprungs bzw. Rücksprungs zum Durchmesser kleiner als 1:10 ist. Die Vorsprünge bzw. Rücksprünge sind dabei äußerst klein und weisen einen Durchmesser von weniger als 1 mm auf.

Wie nachfolgend erläutert wird, ermöglicht es die erfindungsgemäße Ausgestaltung des Lichtaustrittselements, die gewünschten optischen Eigenschaften zu erzielen. Hierbei wird insbesondere auf die Außenseite des Lichtaustrittselements auftreffendes Fremdlicht verhältnismäßig stark gestreut, während hingegen von der Lichtquelle der Leuchte stammendes und durch das Lichtaustrittselement hindurchtretendes Licht nur geringfügig abgelenkt wird. Auf diese Weise wird zum einen erreicht, dass an bzw. in der Leuchte vorgesehene Lichtbeeinflussungselemente wie Raster oder Reflektoren nach wie vor ihre Funktion erfüllen können, andererseits die Außenseite des Lichtaustrittselements nicht mehr spiegelt. Hierdurch wird der Leuchte insgesamt gesehen ein höherwertiges Aussehen verliehen ohne allerdings die Abstrahlungscharakteristik der Leuchte maßgeblich zu beeinflussen.

Die Herstellung des erfindungsgemäßen Lichtaustrittselements erfolgt wiederum vorzugsweise durch ein Spritzguss- oder Blasverfahren. In diesem Fall muss dann das Spritzgusswerkzeug entsprechend modifiziert werden, um die gewünschte Struktur des Lichtaustrittselements zu erzielen. Dies bedeutet, dass die der Außenseite des Lichtaustrittselements entsprechende Oberfläche des Werkzeugs entsprechend gestaltet werden muss, was beispielsweise dadurch erreicht wird, dass die Oberfläche mit einem Werkzeug, welches einen linsenförmigen Kopf hat, gehämmert wird. Hierbei entstehen eine Vielzahl kalottenförmiger Rücksprünge, die keine regelmäßige Anordnung aufweisen, so dass das fertige Lichtaustrittselement dann letztendlich entsprechende linsenförmige Vorsprünge aufweist. Eine alternative Möglichkeit besteht darin, die Oberfläche des Werkzeugs mit kleinen Stahlkugeln zu bestrahlen, wodurch auf besonders effektive Weise der gewünschte statistische Effekt, die unregelmäßige Anordnung der Vorsprünge, erzielt wird. Selbstverständlich bestünde auch die Möglichkeit, die Werkzeugoberfläche mit linsenförmigen Vorsprüngen zu versehen und damit in dem Lichtaustrittselement kalottenförmiger Rücksprünge zu erzielen, der Aufwand zur Herstellung eines entsprechenden Spritzgusswerkzeugs ist allerdings deutlich höher als bei den beiden zuvor geschilderten Varianten.

Die vorliegende Erfindung betrifft demzufolge auch ein Verfahren zum Herstellen eines transparenten Lichtaustrittselements, bei dem zunächst ein transparentes Kunststoffmaterial in flüssiger Form in ein einen Hohlraum bildendes Spritzgießwerkzeug eingebracht und nach dem Erhärten des Kunststoffmaterials das Lichtaustrittselement aus dem Spritzgießwerkzeug entformt wird, wobei ein Spritzgießwerkzeug verwendet wird, welches erfindungsgemäß in der oben beschriebenen Weise ausgestaltet ist. Darüber hinaus betrifft die vorliegende Erfindung auch ein entsprechend gestaltetes Spritzgusswerkzeug.

Nachfolgend soll die Erfindung anhand der beiliegenden Zeichnung näher erläutert werden. Es zeigen:
- Fig. 1a: ein Ausführungsbeispiel der vorliegenden Erfindung in Form einer Leuchte mit einer wannenförmigen Abdeckung, wobei die transparente Abdeckung entsprechend der vorliegenden Erfindung ausgestaltet ist;
- Fig. 1b: die Leuchte aus Fig. 1a im Schnitt;
- Fig. 2: einen vergrößerten Ausschnitt eines erfindungsgemäßen Lichtaustrittselements in Draufsicht; und
- Fig. 3a und b: vergrößerte Darstellungen eines erfindungsgemäßen Lichtaustrittselements im Querschnitt zur Verdeutlichung der damit erzielten optischen Effekte.

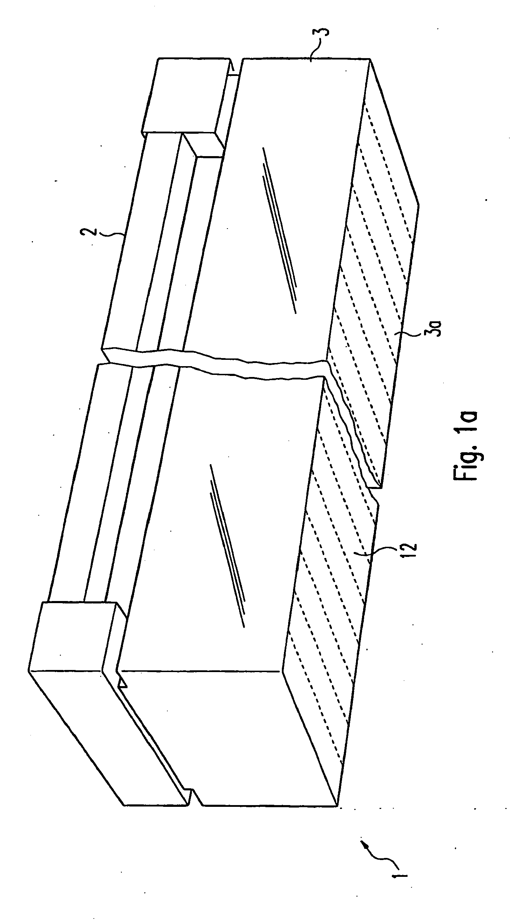

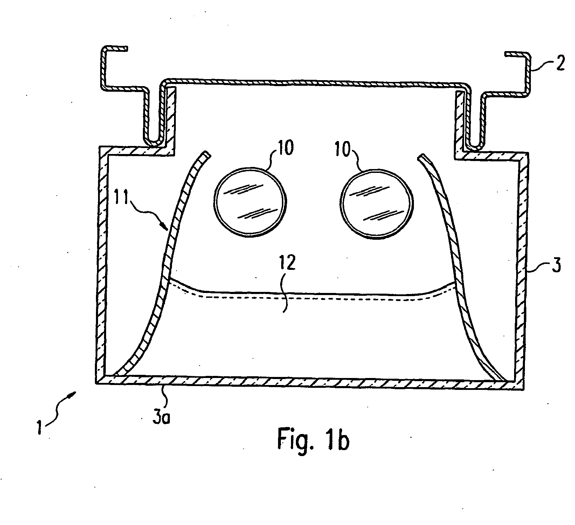

Die Figuren 1a und 1b zeigen eine in ihrer Gesamtheit mit dem Bezugszeichen 1 versehene Leuchte, die beispielsweise in Feuchträumen zum Einsatz kommen kann. An einem an einer Decke zu befestigenden Trägerelement 2 sind mehrere Lichtquellen in Form von länglichen Leuchtstofflampen 10 angeordnet, die von einer transparenten Abdeckung 3 umgeben sind. Die wannenförmige Abdeckung 3 schließt dabei mit dem Trägerelement 2 luftdicht ab, so dass nicht die Gefahr besteht, dass die in dem dadurch gebildeten Innenraum angeordneten Lichtquellen 10 durch äußere Einflüsse - beispielsweise eine erhöhte Luftfeuchtigkeit - beschädigt werden.

Innerhalb der Abdeckung 3, genauer gesagt zwischen den Lichtquellen 10 und der unteren Lichtaustrittsfläche 3a der Abdeckung 3 ist ferner ein Leuchtenraster 11 mit mehreren Querlamellen 10 angeordnet, über welches das von den Lichtquellen 10 nach unten abgestrahlte Licht auf einen vorgegebenen Winkelbereich eingeschränkt wird. Die Unterkanten der Lamellen 12 sind in Figur 1 schematisch durch die gestrichelt gezeichneten Linien dargestellt. Durch das Raster 11 ist gewährleistet, dass eine von unten seitlich auf die Leuchte 1 blickende Person nicht unmittelbar in die Lichtquellen 10 blicken kann und hierbei geblendet wird.

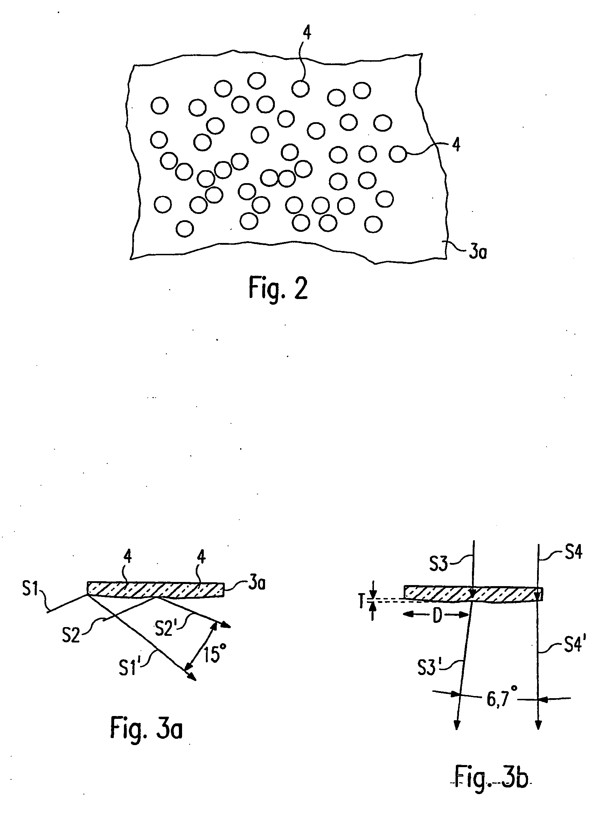

Die Wirkung des Rasters 11 sollte durch die transparente Abdeckung 3 nicht beeinflusst werden. Das heißt, durch die Unterseite 3a der transparenten Abdeckung 3 austretende Lichtstrahlen sollten möglichst wenig gestreut werden, um den durch das Raster 11 vorgegebenen Winkelbereich nicht nachträglich zu verändern. Gleichzeitig sollte allerdings von außen auf die Unterseite 3a auftretendes Fremdlicht möglichst effektiv gestreut werden, so dass keine Spielgelungseffekte auftreten. Die zum Lösen dieser Aufgabenstellung erfindungsgemäß ausgestaltete Strukturierung der transparenten Abdeckung 3 soll nunmehr anhand der Figuren 2 und 3 näher erläutert werden.

Figur 2 zeigt dabei zunächst einen vergrößerten Ausschnitt der transparenten Unterseite 3a der Abdeckung 3 in Draufsicht. Wie der Darstellung entnommen werden kann, ist die Außenseite der Abstrahlfläche 3a, das heißt die den Lichtquellen abgewandte Oberfläche mit einer Vielzahl linsenförmiger Vorsprünge 4 versehen. Die Vorsprünge 4 sind statistisch verteilt, weisen also keine regelmäßige Anordnung auf. Ihr Durchmesser D ist kleiner als 1mm und das Verhältnis zwischen Tiefe T und Durchmesser D (siehe Figur 3b) eines Vorsprungs ist kleiner als 1:10. Die hierdurch erzielten optischen Effekte sind in den Figuren 3a und 3b dargestellt.

Figur 3a zeigt zunächst den Einfluss der erfindungsgemäß strukturierten Oberfläche auf Fremdlicht, das heißt, auf von außen auftreffende Lichtstrahlen. Dargestellt sind dabei zwei parallel verlaufende Lichtstrahlen S1 und S2, die leicht versetzt zueinander auf die Außenseite der transparenten Abstrahlfläche 3a auftreffen. Da die Strahlen S1, S2 an verschiedenen Stellen auftreffen, ergeben sich unterschiedliche Einfallswinkel, so dass beide Strahlen in unterschiedlicher Weise, das heißt mit unterschiedlichen Ausfallwinkeln reflektiert werden. Als Folge davon weisen die von der Oberfläche 3a zurückreflektierten Strahlen S1' und S2' unterschiedliche Richtungen auf und schließen miteinander einen Winkel von etwa 15° ein. Durch diese "Quasi-Streuung" werden Spiegelungseffekte vermieden und somit das gewünschte nicht-fettige Aussehen der Oberfläche erzielt.

Im Gegensatz dazu werden zwei durch die Abdeckung 3 hindurchtretende Lichtstrahlen S3, S4 nur geringfügig beeinlusst, wie Figur 3b zeigt. Beide Strahlen, die wiederum im gleichen Abstand aber nunmehr von der anderen Seite her auf die Abdeckung 3a auftreffen und ursprünglich parallel verlaufen, werden lediglich leicht entsprechend dem Brechungsgesetz abgelenkt und nehmen anschließend im Vergleich zu den reflektierten Lichtstrahlen S1' und S2' einen deutlich kleineren Winkel zueinander ein. Dies bedeutet, dass ursprünglich parallel verlaufende Lichtstrahlen, die durch die transparente Abdeckung 3 hindurchtreten, auch anschließend nahezu parallel zueinander verlaufen. Die Wirkung von innerhalb der Leuchte angeordneten lichtbeeinflussenden Elementen, wie beispielsweise dem Raster oder Reflektoren wird somit durch die transparente Abdeckung 3 nahezu nicht beeinflusst.

Die erfindungsgemäße transparente Abdeckung kann in gewohnter Weise aus Kunststoff bestehen, beispielsweise aus Polymethylmethacrylat PMMA, und wird vorzugsweise wie üblich im Spritzgussverfahren hergestellt. Um hierbei die gewünschte Strukturierung der Außenseite zu erzielen, muss das Spritzgusswerkzeug entsprechend gestaltet werden. Dies kann beispielsweise dadurch erzielt werden, dass die der Außenseite entsprechende Oberfläche des Spritzgusswerkzeugs mit kleinen, statistisch verteilten kalottenförmigen Rücksprüngen versehen wird. Wie bereits erwähnt wurde, kann dies dadurch erfolgen, dass die Oberfläche mit einem linsenförmigen Werkzeug gehämmert oder mit kleinen Kugeln, insbesondere Stahlkugeln bestrahlt wird.

Sollen hingegen kalottenförmige Rücksprünge an dem Lichtaustrittselement 3a erzeugt werden, so muss die Oberfläche des Spritzgusswerkzeugs mit linsenförmigen Vorsprüngen versehen werden. Dies kann durch einen Zwischenschritt in Form einer galvanischen Abformung des Spritzgusswerkzeugs erzielt werden, was allerdings im Vergleich zu den beiden oben genannten Möglichkeiten deutlich aufwendiger ist. Für die Herstellung der transparenten Abdeckung wird somit bevorzugt ein Verfahren beziehungsweise ein Spritzgusswerkzeug verwendet, mit dem linsenförmige Vorsprünge an der Außenseite der Abdeckung erzielt werden.

Durch die erfindungsgemäße Ausgestaltung des transparenten Lichtaustrittselements wird somit erreicht, dass durch das Austrittselement hindurchtretende Lichtstrahlen nachträglich nicht mehr oder nur unwesentlich beeinflusst werden. Die optische Wirkung lichtlenkender Elemente wird somit durch die erfindungsgemäße Abdeckung nicht gestört. Gleichzeitig wird auf die Außenseite der Abdeckung auftreffendes Fremdlicht verhältnismäßig stark gestreut, so dass ungewünschte Spiegelungseffekte unterdrückt werden. Die erfindungsgemäße Strukturierung des transparenten Lichtaustrittselements kann dabei auf eine verhältnismäßig einfache Weise erzielt werden.

Abschließend soll angemerkt werden, dass die vorliegende Erfindung nicht auf Feuchtraumleuchten oder wannenförmige transparente Abdeckungen beschränkt ist. Selbstverständlich könnten transparente - und ggf. auch gefärbte - Lichtaustrittselemente grundsätzlich in der erfindungsgemäßen Weise ausgestaltet werden, sofern die beiden oben genannten Effekte erzielt werden sollen. In jedem Fall kann hierdurch den Lichtaustrittselementen ein höherwertiges Aussehen verliehen werden.

## Patentansprüche

1. Leuchte (1) mit mindestens einer Lichtquelle (10) sowie einem - in Abstrahlrichtung gesehen - vor der Lichtquelle (10) angeordneten transparenten Lichtaustrittselement (3), wobei zumindest ein Teilbereich der der Lichtquelle (10) abgewandten Oberfläche (3a) des Lichtaustrittselements (3) mit einer Vielzahl von linsenförmigen Vorsprüngen (4) oder kalottenförmigen Rücksprüngen, die keine regelmäßige Anordnung aufweisen, versehen ist,
**dadurch gekennzeichnet,**
**dass** der Durchmesser (D) der linsenförmigen Vorsprünge (4) bzw. kalottenförmigen Rücksprünge kleiner als 1mm ist und dass das Verhältnis der Tiefe (T) der linsenförmigen Vorsprünge (4) bzw. kalottenförmigen Rücksprünge zu dem Durchmesser (D) kleiner als 1:10 ist.

2. Leuchte nach Anspruch 1,
**dadurch gekennzeichnet,**
**dass** das Lichtaustrittselement (3) aus einem transparenten Kunststoff besteht.

3. Leuchte nach Anspruch 2,
**dadurch gekennzeichnet,**
**dass** das Lichtaustrittselement (3) aus Polymethylmethacrylat (PMMA) besteht.

4. Leuchte nach Anspruch 2 oder 3,
**dadurch gekennzeichnet,**
**dass** das Lichtaustrittselement (3) durch Spritzgießen hergestellt ist.

5. Leuchte nach einem der vorherigen Ansprüche,
**dadurch gekennzeichnet,**
**dass** zwischen der Lichtquelle (10) und dem Lichtaustrittselement (3) ein Lichtbeeinflussungselement (11) angeordnet ist.

6. Leuchte nach Anspruch 5,
**dadurch gekennzeichnet,**
**dass** es sich bei dem Lichtbeeinflussungselement um ein Leuchtenraster (11) handelt.

7. Leuchte nach einem der vorherigen Ansprüche,
**dadurch gekennzeichnet,**
**dass** das Lichtaustrittselement (3) wannenförmig ausgestaltet ist.

8. Leuchte nach Anspruch 7,
**dadurch gekennzeichnet,**
**dass** es sich um eine Leuchte höherer Schutzart, insbesondere um eine Feuchtraumleuchte oder um eine staubgeschützte Leuchte handelt.

9. Wannenförmiges Lichtaustrittselement (3) zur Verwendung mit einer Leuchte (19), wobei das Lichtaustrittselement (3) transparent ausgestaltet und zur Anordnung
- in Abstrahlrichtung gesehen - vor einer Lichtquelle (10) der Leuchte (1) vorgesehen ist und zumindest ein Teilbereich der Oberfläche (3a) des Lichtaustrittselements (3) mit einer Vielzahl von linsenförmigen Vorsprüngen (4) oder kalottenförmigen Rücksprüngen, die keine regelmäßige Anordnung aufweisen, versehen ist,
**dadurch gekennzeichnet,**
**dass** der Durchmesser (D) der linsenförmigen Vorsprünge (4) bzw. kalottenförmigen Rücksprünge kleiner als 1mm ist und dass das Verhältnis der Tiefe (T) der linsenförmigen Vorsprünge (4) bzw. kalottenförmigen Rücksprünge zu dem Durchmesser (D) kleiner als 1:10 ist.

10. Lichtaustrittselement nach Anspruch 9,
**dadurch gekennzeichnet,**
**dass** das Lichtaustrittselement (3) aus einem transparenten Kunststoff besteht.

11. Lichtaustrittselement nach Anspruch 10,
**dadurch gekennzeichnet,**
**dass** das Lichtaustrittselement (3) aus Polymethylmethacrylat (PMMA) besteht.

12. Lichtaustrittselement nach Anspruch 10 oder 11,
**dadurch gekennzeichnet,**
**dass** das Lichtaustrittselement (3) durch Spritzgießen hergestellt ist.

13. Verfahren zum Herstellen eines transparenten Lichtaustrittselements (3) entsprechend einem der Ansprüche 9 bis 12,
wobei zunächst ein transparentes Kunststoffmaterial in flüssiger Form in ein einen Hohlraum bildendes Spritzgießwerkzeug eingebracht und nach dem Erhärten des Kunststoffmaterials das Lichtaustrittselement (3) aus dem Spritzgießwerkzeug entformt wird und wobei zumindest ein Teilbereich der der Außenseite des Lichtaustrittselements (3) entsprechenden Oberfläche des Spritzgießwerkzeugs mit einer Vielzahl von linsenförmigen Vorsprüngen oder kalottenförmigen Rücksprüngen, die keine regelmäßige Anordnung aufweisen, versehen ist,
**dadurch gekennzeichnet,**
**dass** der Durchmesser (D) der linsenförmigen Vorsprünge bzw. kalottenförmigen Rücksprünge kleiner als 1mm ist und dass das Verhältnis der Tiefe (T) der linsenförmigen Vorsprünge (4) bzw. kalottenförmigen Rücksprünge zu dem Durchmesser (D) kleiner als 1:10 ist.

14. Verfahren nach Anspruch 13,
**dadurch gekennzeichnet,**
**dass** es sich bei dem Kunststoff um Polymethylmethacrylat (PMMA) handelt.

15. Spritzgießwerkzeugs zum Herstellen eines transparenten Lichtaustrittselements (3) entsprechend einem der Ansprüche 9 bis 12,
wobei zumindest ein Teilbereich der der Außenseite des Lichtaustrittselements (3) entsprechenden Oberfläche des Spritzgießwerkzeugs mit einer Vielzahl von statistisch linsenförmigen Vorsprüngen oder kalottenförmigen Rücksprüngen, die keine regelmäßige Anordnung aufweisen, versehen ist,
**dadurch gekennzeichnet,**
**dass** der Durchmesser (D) der linsenförmigen Vorsprünge bzw. kalottenförmigen Rücksprünge kleiner als 1mm ist und dass das Verhältnis der Tiefe (T) der linsenförmigen Vorsprünge (4) bzw. kalottenförmigen Rücksprünge zu dem Durchmesser (D) kleiner als 1:10 ist.

## Claims

1. Luminaire (1) having at least one light source (10) and a transparent light-exit element (3) arranged - seen in emission direction - in front of the light source (10), wherein at least a part region of the surface (3a) of the light-exit element (3) away from the light source (10) is provided with a plurality of lenticular projections (4) or dome-shaped re-entries which do not have any regular arrangement, **characterised in that**
the diameter (D) of the lenticular projections (4) or dome-shaped re-entries is less than 1 mm, and **in that** the ratio of the depth (T) of the lenticular projections (4) or dome-shaped re-entries to the diameter (D) is smaller than 1:10.

2. Luminaire according to claim 1,
**characterised in that**
the light-exit element (3) is of a transparent plastic.

3. Luminaire according to claim 2,
**characterised in that**
the light-exit element (3) is of polymethylmethacrylate (PMMA).

4. Luminaire according to claim 2 or 3,
**characterised in that**
the light-exit element (3) is produced by injection-moulding.

5. Luminaire according to any preceding claim, **characterised in that**
a light-influencing element (11) is arranged between the light source (10) and the light-exit element (3).

6. Luminaire according to claim 5,
**characterised in that**
the light-influencing element is a luminaire raster (11).

7. Luminaire according to any preceding claim, **characterised in that**
the light-exit element (3) is configured so as to be tub-shaped.

8. Luminaire according to claim 7,
**characterised in that**
it is a luminaire of a higher protection type, in particular a moisture-proof luminaire or a dust-proof luminaire.

9. Tub-shaped light-exit element (3) for use with a luminaire (19), wherein the light-exit element (3) is configured so as to be transparent and is provided for arrangement - seen in emission direction - in front of a light source (10) of the luminaire (1), and at least a part region of the surface (3a) of the light-exit element (3) is provided with a plurality of lenticular projections (4) or dome-shaped re-entries which do not have any regular arrangement,
**characterised in that**
the diameter (D) of the lenticular projections (4) or dome-shaped re-entries is less than 1 mm, and **in that** the ratio of the depth (T) of the lenticular projections (4) or dome-shaped re-entries to the diameter (D) is smaller than 1:10.

10. Light-exit element according to claim 9, **characterised in that**
the light-exit element (3) is of a transparent plastic.

11. Light-exit element according to claim 10, **characterised in that**
the light-exit element (3) is of polymethylmethacrylate (PMMA).

12. Light-exit element according to claim 10 or 11, **characterised in that**
the light-exit element (3) is produced by injection-moulding.

13. Method for the production of a transparent light-exit element (3) according to any of claims 9 to 12, wherein firstly a transparent plastic material in liquid form is brought into an injection-moulding tool forming a cavity, and after the hardening of the plastic material the light-exit element (3) is demoulded from the injection-moulding tool and wherein at least a part region of the surface of the injection-moulding tool corresponding to the outer side of the light-exit element (3) is provided with a plurality of lenticular projections or dome-shaped re-entries which do not have any regular arrangement,
**characterised in that**
the diameter (D) of the lenticular projections (4) or dome-shaped re-entries is less than 1 mm, and **in that** the ratio of the depth (T) of the lenticular projections (4) or dome-shaped re-entries to the diameter (D) is smaller than 1:10.

14. Method according to claim 13,
**characterised in that**
the plastic is polymethylmethacrylate (PMMA).

15. Injection-moulding tool for the production of a transparent light-exit element (3) according to any of the claims 9 to 12,
wherein at least a part region of the surface of the injection-moulding tool corresponding to the outer side of the light-exit element (3) is provided with a plurality of statistically lenticular projections or dome-shaped re-entries which do not have any regular arrangement,
**characterised in that**
the diameter (D) of the lenticular projections (4) or dome-shaped re-entries is less than 1 mm, and **in that** the ratio of the depth (T) of the lenticular projections (4) or dome-shaped re-entries to the diameter (D) is smaller than 1:10.

## Revendications

1. Lampe (1) comprenant au moins une source lumineuse (10) ainsi qu'un élément de sortie de lumière transparent (3) placé avant la source lumineuse (10), par rapport au sens de rayonnement, au moins une zone partielle de la surface (3a), opposée à la source lumineuse (10), de l'élément de sortie de lumière (3) étant pourvue d'une pluralité de parties saillantes lenticulaires (4) ou de creux en forme de calottes qui ne forment pas un d'agencement régulier,
**caractérisée en ce que**
le diamètre (D) des parties saillantes lenticulaires (4) et/ou des creux en forme de calottes est inférieur à 1 mm et le rapport entre la profondeur (T) des parties saillantes lenticulaires (4) et/ou des creux en forme de calottes et le diamètre (D) est inférieur à 1:10.

2. Lampe selon la revendication 1, **caractérisée en ce que** l'élément de sortie de lumière (3) est en plastique transparent.

3. Lampe selon la revendication 2, **caractérisée en ce que** l'élément de sortie de lumière (3) est en polyméthylméthacrylate (PMMA).

4. Lampe selon la revendication 2 ou 3, **caractérisée en ce que** l'élément de sortie de lumière (3) est fabriqué par moulage par injection.

5. Lampe selon l'une quelconque des revendications précédentes, **caractérisée en ce qu'**un élément d'altération de la lumière (11) est placé entre la source lumineuse (10) et l'élément de sortie de lumière (3).

6. Lampe selon la revendication 5, **caractérisée en ce que** l'élément d'altération de la lumière est une grille de lampe (11).

7. Lampe selon l'une quelconque des revendications précédentes, **caractérisée en ce que** l'élément de sortie de lumière (3) est réalisé en forme de cuvette.

8. Lampe selon la revendication 7, **caractérisée en ce qu'**il s'agit d'une lampe offrant un degré de protection élevé, en particulier une lampe pour locaux humides ou une lampe protégée contre la poussière.

9. Elément de sortie de lumière (3) présentant une forme de cuvette, destiné à être utilisé avec une lampe (19), l'élément de sortie de lumière (3) étant réalisé de manière transparente et l'agencement avant une source lumineuse (10) de la lampe (1) - par rapport au sens de rayonnement - étant prévu, et au moins une zone partielle de la surface (3a) de l'élément de sortie de lumière (3) étant pourvue d'une pluralité de parties saillantes lenticulaires (4) ou de creux en forme de calottes, qui ne forment pas un agencement régulier,
**caractérisé en ce que**
le diamètre (D) des parties saillantes lenticulaires (4) et/ou des creux en forme de calottes est inférieur à 1 mm et le rapport entre la profondeur (T) des parties saillantes lenticulaires (4) et/ou des creux en forme de calottes et le diamètre (D) est inférieur à 1:10.

10. Elément de sortie de lumière selon la revendication 9, **caractérisé en ce que** l'élément de sortie de lumière (3) est en plastique transparent.

11. Elément de sortie de lumière selon la revendication 10, **caractérisé en ce que** l'élément de sortie de lumière (3) est en polyméthylméthacrylate (PMMA).

12. Elément de sortie de lumière selon la revendication 10 ou 11, **caractérisé en ce que** l'élément de sortie de lumière (3) est fabriqué par moulage par injection.

13. Procédé de fabrication d'un élément de sortie de lumière transparent (3) selon l'une des revendications 9 à 12, un matériau plastique transparent sous forme liquide étant d'abord déposé dans un moule d'injection formant un espace creux et, après que le matériau plastique a durci, l'élément de sortie de lumière (3) étant démoulé du moule d'injection, et au moins une zone partielle de la surface, correspondant à l'extérieur de l'élément de sortie de lumière (3), du moule d'injection étant pourvue d'une pluralité de parties saillantes lenticulaires ou de creux en forme de calottes qui ne forment pas un agencement régulier,
**caractérisé en ce que**
le diamètre (D) des parties saillantes lenticulaires et/ou des creux en forme de calottes est inférieur à 1 mm et le rapport entre la profondeur (T) des parties saillantes lenticulaires (4) et/ou des creux en forme de calottes et le diamètre (D) est inférieur à 1:10.

14. Procédé selon la revendication 13, **caractérisé en ce que** le matériau plastique est du polyméthylméthacrylate (PMMA).

15. Moule d'injection destiné à la fabrication d'un élément de sortie de lumière transparent (3) selon l'une des revendications 9 à 12, au moins une zone partielle de la surface, correspondant à l'extérieur de l'élément de sortie de lumière (3), du moule d'injection étant pourvue d'une pluralité de parties saillantes statistiquement lenticulaires ou de creux en forme de calottes, qui ne forme pas un agencement régulier,
**caractérisé en ce que**
le diamètre (D) des parties saillantes lenticulaires et/ou des creux en forme de calottes est inférieur à 1 mm et le rapport entre la profondeur (T) des parties saillantes lenticulaires (4) et/ou des creux en forme de calottes et le diamètre (D) est inférieur à 1:10.
